Europäisches Patentamt

European Patent Office

Office européen des brevets

(19)

(11) Veröffentlichungsnummer: **0 053 239**
**B1**

(12)

# EUROPÄISCHE PATENTSCHRIFT

(45) Veröffentlichungstag der Patentschrift:
25.09.85

(21) Anmeldenummer: 81107951.6

(22) Anmeldetag: 06.10.81

(51) Int. Cl.⁴: **H 04 B 9/00**, H 04 Q 11/04

(54) **Dienstintegriertes, digitales im Zeitmultiplex arbeitendes Übertragungssystem.**

(30) Priorität: 27.11.80 DE 3044702

(43) Veröffentlichungstag der Anmeldung:
09.06.82 Patentblatt 82/23

(45) Bekanntmachung des Hinweises auf die Patenterteilung:
25.09.85 Patentblatt 85/39

(84) Benannte Vertragsstaaten:
AT CH DE FR GB LI NL SE

(56) Entgegenhaltungen:
DE - A - 2 538 638
DE - A - 2 922 418

Wissenschaftl. Berichte AEG-Telefunken 53 (1980) 1-2 S. 62-71
Proc. IEEE Vol. 58, No. 10, Oct. 80, S. 1291-1299
THE INTERNATIONAL SYMPOSIUM ON SUBSCRIBER LOOPS AND SERVICES, 20.-24. März 1978, Seiten 39-43 Atlanta, New York, U.S.A. B.S. HELLIWELL et al.: "Optical fibre transmission developments and the local loop"
PATENTS ABSTRACTS OF JAPAN, Band 5, Nr. 19 (E-44) (691), 4. Februar 1981
PATENTS ABSTRACTS OF JAPAN, Band 3, Nr. 58 (E-111), 18. Mai 1979
IEEE TRANSACTIONS ON COMMUNICATIONS, Band

(73) Patentinhaber: ANT Nachrichtentechnik GmbH, Gerberstrasse 33, D-7150 Backnang (DE)

(72) Erfinder: Krull, Klaus, Ing.grad., Kantstrasse 3, D-7153 Weissach i.T. (DE)

(74) Vertreter: Schickle, Gerhard, Dipl.-Ing. et al, ANT Nachrichtentechnik GmbH Patent- und Lizenzabteilung Gerberstrasse 33, D-7150 Backnang (DE)

(56) Entgegenhaltungen: (Fortsetzung)
COM-27, Nr. 2, Februar 1979, Seiten 517-521 H. OGIWARA et al.: "Optical switching system experiment"

**Beschreibung**

Die Erfindung betrifft ein dienstintegriertes, digitales, im Zeitmultiplex arbeitendes Übertragungssystem gemäss Oberbegriff des Hauptanspruchs.

Durch die DE-OS 2 538 638 ist ein integriertes Nachrichtensystem für die Überwachung und Vermittlung von Bild, Ton und Daten bekannt geworden, bei dem der Teilnehmeranschluss über zwei gesonderte Glasfasern an die zugehörige zentrale Vermittlungsstelle erfolgt, wobei eine Faser zum Senden und/oder zum Empfangen von Fernsprech- und Videosignalen in Zeitmultiplextechnik benutzt werden.

In der deutschen Offenlegungsschrift 2 922 418 ist ein dienstintegriertes Nachrichtenübertragungs- und Vermittlungssystem für Ton, Bild und Daten vorgeschlagen worden, bei dem nur eine Lichtleitfaser für die Teilnehmeranschlussleitung verwendet wird und bei der wahlweise die Schmalbanddienste mittels Digitalübertragung und Multiplexbildung beim Teilnehmer und/oder die Breitbanddienste mittels analoger Übertragung erfolgen.

In dem Aufsatz «der Einsatz von optischen Systemen in Breitbandverteilanlagen» von Welzenbach u. Wiest in Wissenschaftl. Berichte AEG-TELEFUNKEN 53 (1980) 1–2, S. 62–71, sind mehrere Möglichkeiten der Multiplexbildung von Schmal- und Breitbanddiensten aufgezeigt worden.

Bei all diesen Systemen wurden keine Angaben zur Stromversorgung der teilnehmerseitigen Einrichtungen gemacht.

Bei jetzigen Übertragungssystemen erfolgt die Speisung der teilnehmerseitigen Einrichtungen über die Teilnehmeranschlussleitungen aus der Amtsbatterie. In zukünftigen optischen Übertragungssystemen wird eine amtsseitige Speisung wohl nicht beibehalten werden können, da ein Kupferbeipack im Glasfaserkabel einen technischen Rückschritt darstellt und eine kilometerweite Energieübertragung auf optischem Wege problematisch sein dürfte.

Durch den Aufsatz «Optical Fibre Transmission Developments and the Local Loop» von Helliwell et al. in «The International Symposium on Subscriber Loops and Services», 20.–24. März 1978, ist ein dienstintegriertes Teilnehmersystem mit optischer Übertragung bekannt geworden, bei dem eine «Standby-Batterie» die Teilnehmer-Einrichtungen bei Netzausfall mit Strom versorgt, so dass eine Sprechverbindung aufrechterhalten werden kann. Wie dies bewerkstelligt wird und wie die Multiplexbildung realisiert ist, kann jedoch nicht entnommen werden.

In dem Aufsatz «Fiberguide Systems in the Subscriber Loop» in Proceedings of the IEEE, Vol. 58, No. 10, Oktober 1980, S. 1291–1299, ist ein ähnliches System wie das zuvor beschriebene, diskutiert, wobei ebenfalls bei Netzausfall eine Batterie die wesentlichen Dienste ermöglicht. Allerdings sind die Multiplex- und Demultiplex-Einrichtungen derart konstruiert, dass eine Verminderung der Bruttoübertragungsrate nicht eintritt.

Der Erfindung lag deshalb die Aufgabe zugrunde, ein dienstintegriertes digitales Übertragungssystem der eingangs genannten Art anzugeben, bei dem ein Netzausfall keinen totalen Systemausfall bewirkt, sondern das es ermöglicht, Notdienste wie Telefon, Telex und andere Dienste mit kleiner Bitrate aufrechtzuerhalten. Dabei soll das Übertragungssystem in möglichst unaufwendiger und energiesparender Weise ausgeführt sein.

Die Lösung erfolgt mit den im Patentanspruch 1 gekennzeichneten Merkmalen.

Durch die Kurzfassung von JP-A-55 147 844 und JP-A-54 37 402 sind zwar abgesetzte Teilnehmereinrichtungen eines optischen Übertragungssystems bekannt geworden, bei denen das optische Signal dazu benutzt wird, die Netz-Stromversorgung beim Teilnehmer ein- bzw. auszuschalten, jedoch handelt es sich im 1. Fall um eine Datenverbindung und im 2. Fall um eine Telefoneinrichtung, wobei nicht entnehmbar ist, dass mehrere Schmalband-Dienste oder gar Breitbanddienste integriert sind.

Das erfindungsgemässe Übertragungssystem weist die Vorteile auf, dass aufgrund der Stromversorgung der teilnehmerseitigen Einrichtungen durch das Netz ein teurer Kupferbeipack beim Glasfaserkabel vermieden werden kann, dass bei Netzausfall die Stromversorgung durch die Ladungsspeicher übernommen und damit die Verfügbarkeit der Schmalbanddienste des Übertragungssystems in keiner Weise beeinflusst wird. Dadurch, dass bei Netzausfall mit verminderter Bitrate, also statt der hohen Bitrate bei Breitbandbetrieb mit der niedrigen Bitrate des Schmalbandbetriebs, übertragen wird, wobei die teilnehmerseitigen Einrichtungen für Breitbanddienste, die den grössten Anteil am Stromverbrauch haben, abgeschaltet sind, können so bei erheblich kleinerer Belastung des Ladungsspeichers grosse Netzausfallzeiten überbrückt werden. Vorteilhafterweise ist in einer Ausgestaltung der Erfindung der Ladungsspeicher eine netzgepufferte Batterie.

Die anderen Unteransprüche bilden ebenfalls optimale Ausgestaltungen der Erfindung.

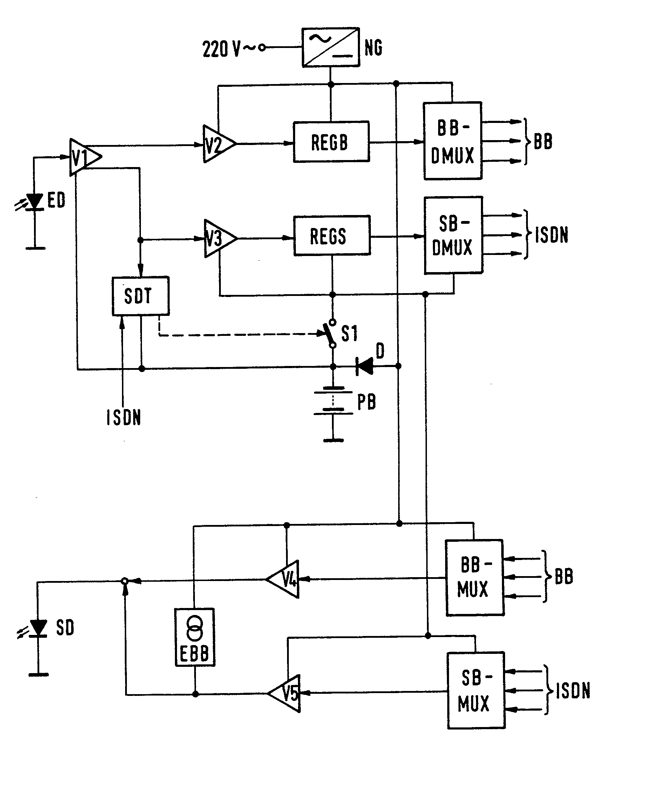

Es folgt nun die Beschreibung der Erfindung anhand der Figur.

Die Figur zeigt ein Blockschaltbild eines erfindungsgemässen Ausführungsbeispiels von teilnehmerseitigen Einrichtungen, wobei die Schmalband-Multiplexsignale den Breitband-Multiplexsignalen frequenzmässig unterlagert sind.

Im oberen Teil der Figur ist der Empfangsteil und im unteren Teil der Sendeteil der teilnehmerseitigen Einrichtung dargestellt. Der Empfangsteil enthält die Empfangsdiode ED, den Hauptverstärker V1, den Breitbandzweig mit Verstärker V2, Regenerator REGB und Breitband-Demultiplexer BB-DMUX sowie den Schmalbandzweig mit Verstärker V3, Regenerator REGS und Schmalband-Demultiplexer SB-DMUX. Die Schaltungseinheiten des Breitbandzweiges werden über das Netzgerät NG direkt aus dem 220-Volt-Netz gespeist, während die Schmalbandeinheiten über einen Schalter S1 von der Pufferbatterie PB gespeist werden, welch letztere über die Diode D gepuffert wird. Empfangsdiode ED und Hauptverstärker V1 sowie der erfindungsgemässe Signaldetektor SDT werden direkt von der Pufferbatterie PB gespeist. Durch den Signaldetektor SDT wird das ankommende Schmalband-Multiplexsignal überwacht und erkannt, wenn der Teilnehmer angerufen wird, wodurch der Schalter S1 betätigt und die Schmalband-Schaltungseinheiten eingeschaltet werden.

Vorteilhafterweise ist der Signaldetektor so aufgebaut, dass er eine Integration der ankommenden Signale durchführt. Bei überschreiten einer vorgegebenen Spannungswelle wird die Umschaltung des Schalters S1 bewirkt. Vorhandene Breitbandsignale werden dabei eliminiert, da sie bei geeigneter Wahl der Integrationszeitkonstanten eine konstante Spannung ergeben.

Der Betrieb des Schmalbandzweiges wird so lange aufrechterhalten, wie die Verbindung besteht. Wird die Verbindung unterbrochen, so werden keine Signale mehr übertragen, worauf der Signaldetektor SDT mittels Schalter S1 den Schmalbandzweig von der Stromversorgung abtrennt.

Entsprechend wird mit dem Sendeteil verfahren. Der Breitbandzweig mit Breitband-Multiplexer BB-MUX und Verstärker V4 werden durch das Netzgerät NG gespeist und können deshalb bei Netzausfall nicht betrieben werden, während der Schmalbandzweig mit Schmalband-Multiplexer SB-MUX und Verstärker V5 über den Schalter S1 und der Pufferbatterie PB versorgt werden. Die Sendediode SD wird zum einen von einer Stromquelle EBB durch das Netzgerät NG versorgt, wodurch Breitbandübertragungen ermöglicht werden. Bei Netzausfall wird die Stromquelle EBB abgeschaltet, zur Ansteuerung der Sendediode SD im reinen Schmalbandbetrieb sind jedoch die vom Verstärker V5 gelieferten Stromimpulse ausreichend.

**Patentansprüche**

1. Dienstintegriertes, digitales im Zeitmultiplex arbeitendes System mit Einrichtungen zur Übertragung von Schmal- und Breitbandsignalen zwischen einem Teilnehmer und einer Zentrale, wobei sendeseitig die Schmal- und Breitbandsignale durch Multiplexer zusammengefasst, über ein Lichtwellenleitersystem übertragen und empfangsseitig durch Demultiplexer wieder zurückgewonnen werden, wobei die teilnehmerseitigen Einrichtungen, die durch das Netz mit Strom versorgt werden, einen Ladungsspeicher aufweisen, der bei Netzausfall die Stromversorgung übernimmt, und wobei bei Netzausfall Teile der Einrichtungen derart abschaltbar sind, dass die Übertragung über das Lichtwellenleitersystem mit verminderter Bitrate erfolgt, dadurch gekennzeichnet, dass in der Teilnehmer-Einrichtung sendeseitig die Schmalbandsignale (ISDN) durch einen Schmalband-Multiplexer (SM-MUX) zu einem Schmalband-Multiplexsignal und die Breitbandsignale durch einen Breitband-Multiplexer (BB-MUX) zu einem Breitband-Multiplexsignal zusammengefasst und empfangsseitig durch einen Breitband-Demultiplexer (BB-DMUX) die Breitbandsignale und durch einen Schmalband-Demultiplexer (SB-DMUX) die Schmalbandsignale (ISDN) zurückgewonnen werden, dass sendeseitig der Ausgang des Schmalband-Multiplexers (SB-MUX) und der Ausgang des Breitband-Multiplexers (BB-MUX) auf die Sendediode (SD) des Lichtwellenleitersystems und empfangsseitig der Eingang des Schmalband-Demultiplexers (SB-DMUX) und der Eingang des Breitband-Demultiplexers (BB-DMUX) auf die Empfangsdiode (ED) des Lichtwellenleitersystems geschaltet sind, dass ein Signaldetektor (SDT) vorgesehen ist, durch den überwacht wird, ob Signale übertragen werden oder nicht, dass die zur Übertragung benötigten Baugruppen der Einrichtungen abgeschaltet werden, wenn keine Übertragung stattfindet, und eingeschaltet werden, wenn eine Übertragung stattfinden soll, und dass bei Netzausfall die Baugruppen für Breitband-Signalübertragung abgeschaltet werden und nur die Baugruppen für Schmalband-Signalübertragung über Schalter (S1) durch den Ladungsspeicher betreibbar sind.

2. Übertragungssystem nach Anspruch 1, dadurch gekennzeichnet, dass der Ladungsspeicher eine netzgepufferte Batterie (PB) ist.

3. Übertragungssystem nach einem der vorhergehenden Ansprüche, dadurch gekennzeichnet, dass der Signaldetektor (SDT) einen Integrator mit Schwellwertschalter enthält, durch den bei Erreichen einer bestimmten Spannungsschwelle eine An- bzw. Abschaltung der Stromversorgung erfolgt.

4. Übertragungssystem nach einem der vorangehenden Ansprüche, dadurch gekennzeichnet, dass sendeseitig zwischen Sendediode (SD) des Lichtwellenleitersystems und dem Ausgang des Breit- und Schmalband-Multiplexers (BB-MUX, SB-MUX) Verstärker (V4, V5) eingefügt sind.

5. Übertragungssystem nach einem der vorhergehenden Ansprüche, dadurch gekennzeichnet, dass empfangsseitig zwischen Empfangsdiode (ED) und dem Eingang des Breit- und Schmalband-Demultiplexers (BB-DMUX, SB-DMUX) ein Hauptverstärker (V1), im Breitbandzweig ein Verstärker (V2) und ein Regenerator (REGB) und im Schmalbandzweig ein Verstärker (V3) und ein Regenerator (REGS) eingefügt sind.

**Claims**

1. Service-integrated digital system operating in time-division multiplex with equipments for the transmission of narrow and wide band signals between a subscriber and an exchange, wherein the narrow and wide band signals are combined at the transmitting and through multiplexers, transmitted through a light wave conductor system and again reconstituted at the receiving and through demultiplexers, wherein the subscriber and equipments, which are supplied with current through the mains, display a charge store, which in the case of mains failure takes over the current supply and wherein parts of the equipments are in the case of mains failure switchable off in such a manner that the transmission by way of the light wave conductor system takes place at reduced bit rate, characterised thereby, that in the subscriber equipment, the narrow band signals (ISDN) are combined through a narrow band multiplexer (SM-MUX) into a narrow band multiplex signal and the wide band signals are combined through a wide band multiplexer (BB-MUX) into a wide band multiplex signal at the transmitting end and the wide band signals are reconstituted through a wide band demultiplexer (BB-DMUX) and the narrow band signals (ISDN) are reconstituted through a narrow band demultiplexer (SB-DMUX) at the receiving end, the output of the narrow band multiplexer (SB-MUX) and the output of the wide band multiplexer (BB-MUX) are connected at the transmitting end to the transmitting diode (SD) of the light wave conductor system and the input of the narrow band demultiplexer (SB-DMUX) and the input of the wide band demultiplexer (BB-DMUX) are connected at the receiving end to the receiving diode (ED) of the light wave conductor system, that a signal detector (SDT) is provided, through which it is monitored whether or not signals are transmitted, that those components groups of the equipments, which are needed for transmission, are switched off when no transmission takes place and are switched on when a transmission shall take place and that the component groups for wide band signal transmission are switched off in the case of mains failure and only the component groups for narrow band signal transmission are energisable by way of switch (S1) by the charge store.

2. Transmission system according to claim 1, characterised thereby, that the charge store is a mains buffer battery (PB).

3. Transmission system according to one of the preceding claims, characterised thereby, that the signal detector (SDT) contains an integrator with threshold value switch, through which a switching on or off of the current supply takes place on attainment of a certain voltage threshold.

4. Transmission system according to one of the preceding claims, characterised thereby, that amplifiers (V4, V5) are inserted at the transmitting and between transmitting diode (SD) of the light wave conductor system and the outputs of the wide and the narrow band multiplexers (BB-MUX, SB-MUX).

5. Transmission system according to one of the preceding claims, characterised thereby, that at the receiving end, a main amplifier (V1) is inserted between receiving diode (ED) and the inputs of the wide and the narrow band demultiplexers (BB-DMUX, SB-DMUX), an amplifier (V2) and a regenerator (REGB) are inserted in the wide band branch and an amplifier (V3) and a regenerator (REGS) are inserted in the narrow band branch.

**Revendications**

1. Système numérique à intégration des services, fonctionnant en multiplex temporel, avec des équipements pour la transmission de signaux à bande étroite et à large bande entre un abonné et un central, les-dits signaux étant réunis à l'émission par des multiplexeurs, transmis par un système optique, puis récupérés à la réception par des démultiplexeurs; les équipements d'abonné alimentés par le réseau comportant un accumulateur de charge qui assure l'alimentation en cas de défaillance du réseau; et des parties des équipements étant déconnectables en cas de défaillance du réseau, de façon que la transmission par le système optique s'effectue avec un débit binaire réduit, ledit système étant caractérisé en ce que dans l'équipement de l'abonné, à l'émission, les signaux à bande étroite (ISDN) sont réunis en un signal multiplexé à bande étroite par un multiplexeur à bande étroite (SM-MUX) et les signaux à large bande en un signal multiplexé à large bande par un multiplexeur à large bande (BB-MUX), et à la réception, les signaux à large bande sont récupérés par un démultiplexeur à large bande (BB-DMUX) et les signaux à bande étroite (ISDN) par un démultiplexeur à bande étroite; à l'émission, la sortie du multiplexeur à bande étroite (SB-MUX) et la sortie du multiplexeur à bande large (BB-MUX) sont connectées à la diode émettrice (SD) du système de fibres optiques, et à la réception, l'entrée du démultiplexeur à bande étroite (SB-DMUX) et l'entrée du démultiplexeur à large bande (BB-DMUX) sont connectées à la diode réceptrice (ED) du système fibres optiques; un détecteur de signal (SDT) est prévu, qui surveille pour déterminer si des signaux sont transmis ou non; les modules des équipements nécessaires pour la transmission sont déconnectés en l'absence de transmission et connectés quand une transmission doit avoir lieu; et en cas de défaillance du réseau, les modules de transmission de signaux à large bande sont déconnectés et seuls les modules de transmission de signaux à bande étroite peuvent fonctionner avec alimentation par l'accumulateur de charge, par l'intermédiaire de l'interrupteur (S1).

2. Système de transmission selon revendication 1, caractérisé en ce que l'accumulateur de charge est une batterie tamponnée par le réseau (PB).

3. Système de transmission selon une des revendications 1 et 2, caractérisé en ce que le détecteur de signal (SDT) est un intégrateur avec interrupteur à seuil, qui connecte ou déconnecte l'alimentation quand un seuil de tension déterminé est atteint.

4. Système de transmission selon une quelconque des revendications 1 à 3, caractérisé par des amplificateurs (V4, V5) insérés du côté émission, entre la diode émettrice (SD) du système de fibres optiques et la sortie des multiplexeurs à large bande et à bande étroite (BB-MUX, SB-MUX).

5. Système de transmission selon une quelconque des revendications 1 à 4, caractérisé par l'insertion du côté réception, entre la diode réceptrice (ED) et l'entrée des démultiplexeurs à large bande et à bande étroite (BB-DMUX, SB-DMUX), d'un amplificateur principal (V1); dans la branche à bande large, d'un amplificateur (V2) et d'un régénérateur (REGB); et dans la branche à bande étroite, d'un amplificateur (V3) et d'un régénérateur (REGS).